Europäisches Patentamt

European Patent Office

Office européen des brevets

(19)

(11) **EP 0 902 883 B1**

## (12) FASCICULE DE BREVET EUROPEEN

(45) Date de publication et mention
de la délivrance du brevet:
**03.04.2002 Bulletin 2002/14**

(21) Numéro de dépôt: **97928307.4**

(22) Date de dépôt: **06.06.1997**

(51) Int Cl.⁷: **G01F 1/66**

(86) Numéro de dépôt international:
**PCT/FR97/01012**

(87) Numéro de publication internationale:
**WO 97/46854 (11.12.1997 Gazette 1997/53)**

(54) **PROCEDE DE MESURE DU TEMPS DE PROPAGATION D'UN SIGNAL ACOUSTIQUE DANS UN FLUIDE PAR PASSAGE A ZERO DUDIT SIGNAL ACOUSTIQUE**

VERFAHREN ZUR MESSUNG DER FORTPFLANZUNGSZEIT EINES AKUSTISCHEN SIGNALS IN EINER FLÜSSIGKEIT DURCH DETEKTION DES NULLPUNKTDURCHGANGS DES SIGNALS

METHOD FOR MEASURING A SOUND SIGNAL PROPAGATION DELAY IN A FLUID BY ZERO-CROSSING OF THE SAID SOUND SIGNAL

(84) Etats contractants désignés:
**DE FR GB IT**

(30) Priorité: **07.06.1996 FR 9607189**

(43) Date de publication de la demande:
**24.03.1999 Bulletin 1999/12**

(73) Titulaire: **SCHLUMBERGER INDUSTRIES S.A.**
**92120 Montrouge (FR)**

(72) Inventeurs:
• **DE VANSSAY, Robert**
**F-91600 Savigny-sur-Orge (FR)**

• **JUILLARD, Jérome**
**F-06000 Nice (FR)**

(74) Mandataire: **Feray, Valérie et al**
**Cabinet FERAY/LENNE**
**44/52, Rue de la Justice**
**75020 Paris (FR)**

(56) Documents cités:
**EP-A- 0 100 584**     **EP-A- 0 312 224**
**EP-A- 0 426 309**     **US-A- 5 012 449**

## Description

La présente invention a pour objet un procédé de mesure du temps de propagation d'un signal acoustique dans un écoulement de fluide entre un premier transducteur jouant le rôle d'émetteur et un second transducteur jouant le rôle de récepteur et situé à une distance déterminée du premier transducteur, le signal acoustique émis par le premier transducteur étant constitué par au moins une impulsion émise à une fréquence acoustique déterminée Fa et le signal acoustique reçu par le second transducteur comprenant une série d'oscillations caractéristiques dont l'amplitude est d'abord croissante sur plusieurs périodes, puis décroissante sur plusieurs périodes suivantes, l'enveloppe des oscillations caractéristiques présentant la forme d'un fuseau, le procédé consistant à échantillonner le signal acoustique reçu, à une fréquence d'échantillonnage Fe, à numériser le signal acoustique reçu échantillonné, et à rechercher, par analyse du signal acoustique reçu échantillonné et numérisé, le premier passage à zéro significatif des oscillations caractéristiques du signal acoustique reçu.

Il est connu depuis de nombreuses années de mesurer le débit d'un fluide (ou son volume) s'écoulant dans une conduite en utilisant la propagation des signaux acoustiques émis entre deux transducteurs acoustiques situés en des points espacés dans la direction de l'écoulement du fluide. En principe, un signal acoustique émis du premier transducteur vers le second transducteur est reçu par ce second transducteur et le temps de propagation Td de ce signal acoustique est mesuré. De même, on mesure le temps de propagation Tu d'un signal acoustique émis du second transducteur vers le premier transducteur après réception dudit signal par ce premier transducteur.

Dans un compteur de fluide, le débit peut être obtenu en combinant une mesure des temps de propagation des deux signaux acoustiques émis entre les deux points dans des directions opposées avec une mesure des déphasages acoustiques induits dans chaque signal acoustique par la propagation de chacun des signaux acoustiques dans l'écoulement. La demande de brevet européen n° 0 426 309 décrit un exemple d'un tel système de mesure de débit, dans lequel le signal reçu est échantillonné et converti numériquement, la mesure du déphasage acoustique étant effectuée en réalisant une détection synchrone du signal numérisé.

Lors de la mesure de la vitesse d'écoulement d'un gaz dans un compteur de gaz utilisant deux transducteurs ultrasonores, il est nécessaire de mesurer le temps de parcours de l'onde ultrasonore entre l'instant d'émission et l'instant de réception, dès lors que la célérité des ondes ultrasonores est dépendante de la nature du gaz.

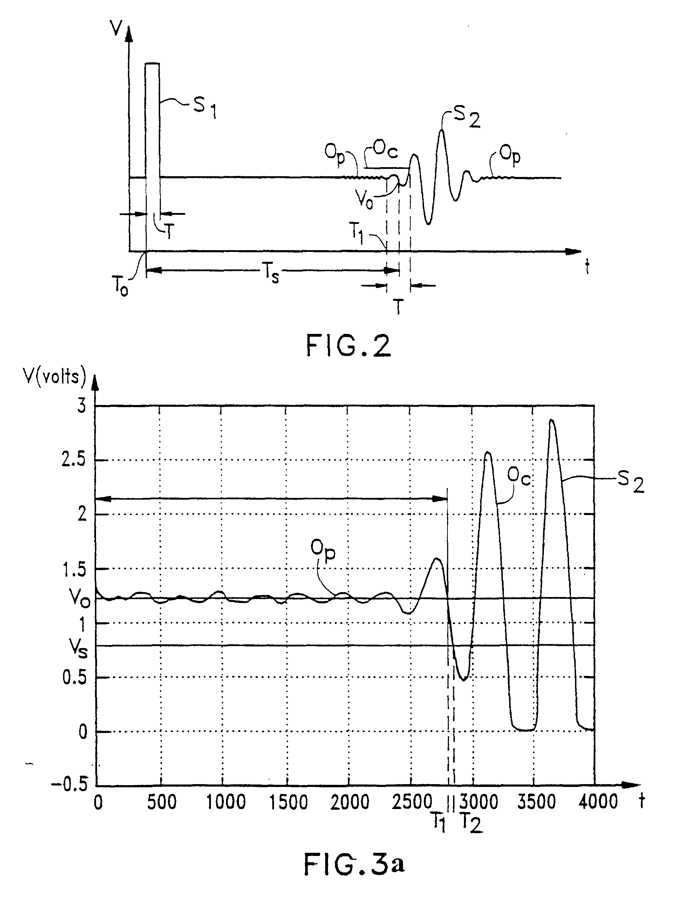

On a représenté sur la Figure 2 la forme d'un signal impulsionnel rectangulaire $S_1$ de largeur T émis à un instant $T_0$ par un premier transducteur ultrasonore disposé dans le flux d'écoulement d'un fluide en un premier point, et la forme du signal $S_2$ constituant la réponse impulsionnelle reçue en écho à un instant $T_1$ par un deuxième transducteur ultrasonore disposé dans le flux d'écoulement du fluide en un deuxième point distinct du premier point.

Le signal acoustique $S_2$ reçu par le second transducteur est constitué par une série d'oscillations caractéristiques $O_c$ qui augmentent d'amplitude sur plusieurs périodes puis décroissent, l'enveloppe des oscillations caractéristiques présentant la forme d'un fuseau. Les oscillations caractéristiques $O_c$ du signal $S_2$ sont précédées et suivies d'oscillations parasites $O_p$ de faible amplitude. Pour déterminer l'instant $T_1$ de début des oscillations caractéristiques, il convient de repérer le premier passage à zéro significatif des oscillations caractéristiques $O_c$ du signal acoustique reçu $S_2$.

On a représenté sur la Figure 3, à une échelle plus grande que sur la Figure 2, un exemple de signal acoustique $S_2$ reçu en écho à une impulsion rectangulaire $S_1$ émise à une fréquence acoustique déterminée Fa.

Pour déterminer le début des oscillations caractéristiques $O_c$, selon un procédé connu, on fixe une tension de seuil $V_S$, par rapport à laquelle on compare le niveau du signal acoustique reçu $S_2$, la comparaison s'effectuant sur un signal numérique obtenu après échantillonnage du signal acoustique analogique reçu, à une fréquence d'échantillonnage Fe qui constitue par exemple un multiple de la fréquence acoustique Fa.

Dans ce cas, on repère l'instant $T_2$ auquel l'amplitude du signal reçu franchit la tension de seuil $V_S$, puis on identifie l'instant du passage à zéro précédent (ou suivant) que l'on considère comme l'instant $T_1$ de départ des oscillations caractéristiques $O_c$ du signal acoustique reçu $S_2$.

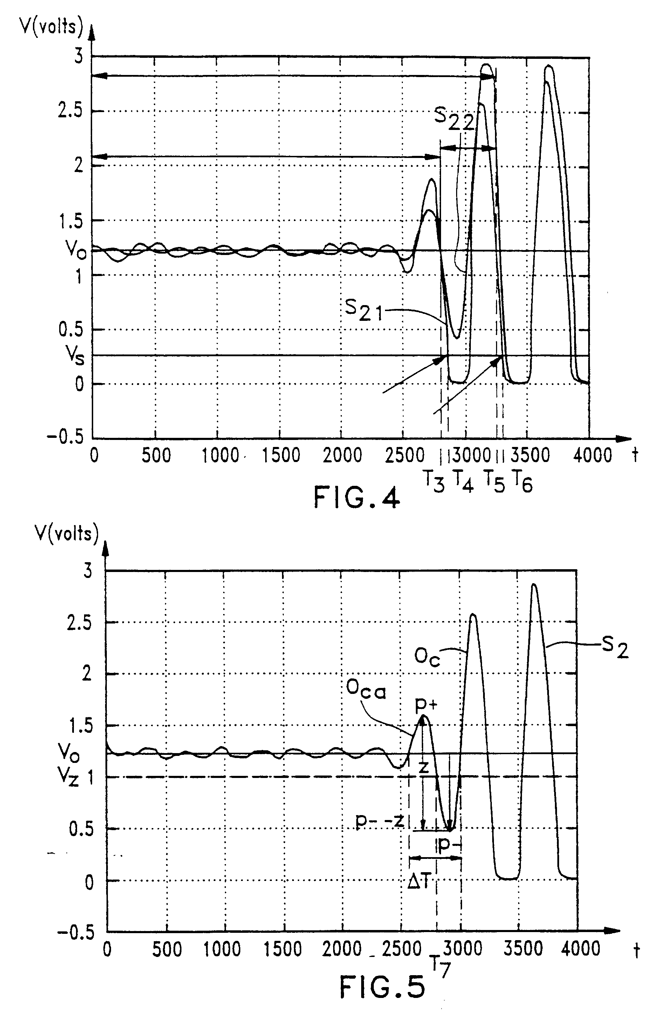

Une telle méthode de mesure peut conduire à des erreurs dès lors que les oscillations caractéristiques $O_c$ du signal acoustique reçu $S_2$ peuvent être plus ou moins amplifiées en fonction de la nature du gaz. Ainsi, on a représenté sur la Figure 4 une courbe $S_{21}$ qui correspond à la forme d'un signal acoustique reçu pour de l'azote ($N_2$) et une courbe $S_{22}$ qui correspond à la forme d'un signal acoustique reçu pour un mélange de gaz carbonique et de méthane ($CO_2/CH_4$). On constate que la courbe $S_{21}$ franchit la tension de seuil $V_S$ à un instant $T_4$ qui déclenche l'identification du passage à zéro précédent à un instant $T_3$ qui est considéré à juste titre comme la marque du début des oscillations caractéristiques $O_c$. En revanche, on peut constater que la courbe $S_{22}$, qui est en phase avec la courbe $S_{21}$, franchit la tension de seuil $V_S$ à un instant $T_6$ postérieur à l'instant $T_4$ et décalé par rapport à celui-ci de la valeur d'une période $T_R$ du signal reçu. L'instant $T_5$ identifié alors pour la courbe $S_{22}$ comme le point de passage à zéro précédant immédiatement le franchissement de seuil à l'instant $T_6$, est alors considéré comme la marque du début des oscillations caractéristiques $O_c$ de la courbe $S_{22}$. Or, com-

me on peut le voir sur la Figure 4, la courbe $S_{22}$ présente un lobe négatif qui ne vient qu'affleurer la valeur de la tension de seuil $V_s$ sans atteindre ou franchir ce seuil.

Par suite des atténuations ou amplifications du signal reçu $S_2$, qui varient en fonction de la nature du gaz, la méthode classique de mesure du temps du premier passage à zéro des oscillations caractéristiques du signal reçu peut engendrer une erreur de plus ou moins une période qui fait diminuer de façon significative la précision des mesures.

L'invention vise à remédier aux inconvénients précités et à permettre de diminuer la sensibilité du procédé de mesure du temps de passage à zéro d'un signal acoustique reçu, vis-à-vis des variations de formes d'onde de ce signal ainsi que vis-à-vis d'éventuelles perturbations extérieures susceptibles d'être détectées par une simple méthode de surveillance de franchissement de seuil, et qui pourraient engendrer des mesures erronées.

Ces buts sont atteints, conformément à l'invention, grâce à un procédé de mesure du temps de propagation d'un signal acoustique dans un écoulement de fluide entre un premier transducteur jouant le rôle d'émetteur et un second transducteur jouant le rôle de récepteur et situé à une distance déterminée du premier transducteur, le signal acoustique émis par le premier transducteur étant constitué par au moins une impulsion émise à une fréquence acoustique déterminée Fa et le signal acoustique reçu par le second transducteur comprenant une série d'oscillations caractéristiques dont l'amplitude est d'abord croissante sur plusieurs périodes, puis décroissante sur plusieurs périodes suivantes, l'enveloppe des oscillations caractéristiques présentant la forme d'un fuseau, le procédé consistant à échantillonner le signal acoustique reçu, à une fréquence d'échantillonnage Fe, à numériser le signal acoustique reçu échantillonné, et à rechercher, par analyse du signal acoustique reçu échantillonné et numérisé, le premier passage à zéro significatif des oscillations caractéristiques du signal acoustique reçu, caractérisé en ce que, pour rechercher le premier passage à zéro significatif des oscillations caractéristiques du signal acoustique reçu, on définit au préalable une première période caractéristique idéale déterminant le premier passage par zéro des oscillations caractéristiques du signal acoustique reçu, en caractérisant cette période idéale par un rapport d'amplitudes théorique $\Delta$ entre les amplitudes maximales Pi- et Pi+ des deux lobes de cette période, on détermine pour chaque période du signal acoustique reçu échantillonné et numérisé, les amplitudes maximales P- et P+ des deux lobes de la période examinée, on compare le rapport de ces amplitudes P- et P+ au rapport d'amplitudes théorique correspondant de la période idéale puis, si le résultat de la comparaison est supérieur à une valeur de seuil $G_S$, on considère la période examinée comme une période parasite correspondant à du bruit tandis que, si le résultat de la comparaison est inférieur à cette valeur de seuil $G_S$, on considère la période examinée comme une période caractéristique et on détermine alors le passage par zéro entre deux lobes de cette période caractéristique, lequel passage à zéro est considéré comme le premier passage à zéro significatif des oscillations caractéristiques du signal acoustique reçu.

Le rapport d'amplitudes théorique $\Delta$ entre les amplitudes maximales Pi- et Pi+ des deux lobes de ladite période idéale est déterminé au préalable à partir d'une moyenne, pour plusieurs gaz différents et à différents débits, du rapport entre les amplitudes maximales P- et P+ de la période caractéristique observée à partir de l'enregistrement de signaux acoustiques reçus.

Le rapport d'amplitude $\Delta$ entre les amplitudes maximales Pi- et Pi+ des deux lobes de la première période caractéristique idéale d'un signal acoustique reçu est quasi constant en fonction de la nature des gaz et est indépendant d'un facteur de gain. Le choix d'un critère de comparaison basé sur ce rapport $\Delta$ permet de diminuer très fortement la dépendance de la mesure à la nature du gaz, et donc d'améliorer la précision et la fiabilité des mesures.

Selon un premier mode de réalisation de l'invention, la comparaison entre le rapport des amplitudes P- et P+ de la période examinée et le rapport d'amplitudes théorique $\Delta$ correspondant de la période idéale s'effectue en calculant un critère de ressemblance G qui constitue le résultat de la comparaison comparé à la valeur de seuil $G_S$, et qui est défini de la façon suivante :

$$ G = \left| \frac{(P-) - \Delta\,(P+)}{(P-)} \right| $$

Selon un deuxième mode de réalisation de l'invention, la comparaison entre le rapport des amplitudes P- et P+ de la période examinée et le rapport d'amplitudes théorique $\Delta$ correspondant de la période idéale s'effectue en calculant un critère de ressemblance G qui constitue le résultat de la comparaison comparé à la valeur de seuil $G_S$, et qui est défini de la façon suivante :

$$ G = \left| \frac{(P-) - \Delta\,(P+)}{(P-) - z} \right| $$

où z représente un terme de décalage destiné à rendre le critère de ressemblance G légèrement dépendant de l'amplitude maximale (P-) du lobe négatif de la période caractéristique examinée.

Selon ce deuxième mode de réalisation, on limite les risques de pouvoir détecter des formes d'ondes ressemblant au critère de ressemblance ou gabarit G, qui seraient noyées dans du bruit.

Pour réduire encore la probabilité de détecter des périodes ressemblantes de faible amplitude, selon un troisième mode de réalisation de l'invention, la comparaison entre le rapport des amplitudes P- et P+ de la période examinée et le rapport d'amplitudes théorique correspondant de la période idéale s'effectue en calculant un critère de ressemblance G qui constitue le résultat de la comparaison comparé à la valeur de seuil $G_s$, et qui est défini de la façon suivante :

$$G = \left| \frac{(P-) - _\Delta[(P+) - z']}{(P-) - z} \right|$$

où z représente un terme de décalage destiné à rendre le critère de ressemblance G légèrement dépendant de l'amplitude maximale (P-) du lobe négatif de la période caractéristique examinée, et z' représente un terme de décalage destiné à rendre le critère de ressemblance G légèrement dépendant de l'amplitude maximale (P+) du lobe positif de la période caractéristique examinée.

Afin d'éviter des erreurs dans la détermination des amplitudes maximales P- et P+ des deux lobes de chaque période examinée, erreurs qui peuvent être dues à un déphasage existant entre le signal acoustique reçu et le signal d'échantillonnage, on peut utiliser un algorithme d'approximation du maximum (en valeur absolue) à partir des points échantillonnés au voisinage de chaque maximum en vue d'obtenir une meilleure précision sur les valeurs P- et P+. Toujours pour éviter ces mêmes erreurs, lorsque le signal acoustique reçu est répétable, on effectue plusieurs mesures successives respectivement sur plusieurs signaux acoustiques consécutifs, en déphasant pour chaque signal acoustique le signal d'échantillonnage par rapport au signal acoustique considéré, afin d'obtenir plusieurs points échantillonnés décalés au voisinage du maximum.

Selon une variante de réalisation permettant également de réduire la probabilité de détecter des périodes ressemblantes de faible amplitude, on effectue, pour chaque période examinée, deux ou trois calculs du critère de ressemblance G avec des valeurs du rapport d'amplitudes théorique différentes voisines du rapport d'amplitude théorique prédéterminé et ne s'écartant pas de celle-ci de plus de 10%, et l'on considère la période examinée comme une période caractéristique si le critère de ressemblance calculé G est dans tous les cas inférieur à la valeur de seuil $G_s$.

Pour déterminer la valeur de seuil $G_s$ du critère de ressemblance G, ainsi que la valeur du terme de décalage z, on trace au préalable, pour différents gaz et différents débits, en faisant varier le déphasage entre la fréquence d'échantillonnage Fe et le signal acoustique reçu et en appliquant un facteur de gain variant entre 0,45 et 1,5, un réseau de premières courbes représentant les valeurs maximums du critère de ressemblance G pour les périodes caractéristiques observées et un réseau de deuxièmes courbes représentant les valeurs minimums du critère de ressemblance G pour les périodes parasites observées, en fonction de différentes valeurs possibles du terme de décalage z, et on choisit la valeur de seuil $G_s$ et celle du terme de décalage z en fonction de la marge de sécurité possible dans la zone intermédiaire entre le réseau de premières courbes et le réseau de deuxièmes courbes.

A titre d'exemple, la valeur de seuil $G_s$ peut être comprise entre 0,7 et 1,7 et la valeur du terme de décalage z peut être comprise entre 0,21 et 0,25 V.

L'invention est avantageusement applicable à un procédé de mesure de la vitesse d'écoulement d'un fluide entre deux transducteurs disposés en des points de mesure espacés dans la direction d'un écoulement du fluide selon lequel la valeur de la vitesse d'écoulement à mesurer est obtenue en combinant une mesure des temps de propagation respectifs de chacun des deux signaux acoustiques émis entre les deux points dans des sens opposés par les transducteurs avec une mesure des déphasages acoustiques respectivement induits dans chaque signal acoustique par la propagation de chacun desdits signaux acoustiques dans l'écoulement, la mesure des temps de propagation respectifs de chacun des deux signaux acoustiques émis entre les deux points de mesure étant effectuée conformément au procédé selon la présente invention.

D'autres caractéristiques et avantages de l'invention ressortiront de la description suivante de modes particuliers de réalisation, faite en référence aux dessins annexés, sur lesquels :

- la Figure 1 est une représentation, sous la forme d'un schéma-bloc, de l'ensemble d'un dispositif de comptage de gaz connu auquel est applicable la présente invention ;
- la Figure 2 est un diagramme montrant le principe d'une méthode connue de détermination du temps de propagation d'un signal acoustique dans un milieu fluide ;
- la Figure 3 est un diagramme agrandi d'une partie de la Figure 2 montrant le principe d'une méthode connue de détermination du temps de propagation d'un signal acoustique par comparaison du signal reçu avec une valeur de seuil ;
- la Figure 3a est un diagramme analogue à celui de la Figure 3 montrant la façon dont on opère sur un signal échantillonné, selon une méthode connue de détermination du temps de propagation d'un signal acoustique par passage à zéro ;
- la Figure 4 est un ensemble de deux diagrammes analogues à celui de la Figure 3 montrant les risques d'erreur dans une méthode connue de détermination du temps de propagation d'un signal acoustique faisant appel à une comparaison des signaux reçus avec une valeur de seuil ;

- la Figure 5 est un diagramme montrant le principe de mise en oeuvre du procédé selon l'invention pour la détermination du temps de propagation d'un signal acoustique dans un milieu fluide ; et
- la Figure 6 est un diagramme comportant des familles de courbes permettant de choisir des valeurs de paramètres utiles pour la mise en oeuvre du procédé selon l'invention.
- la Figure 7 est un organigramme montrant un exemple des différentes étapes du procédé selon l'invention.

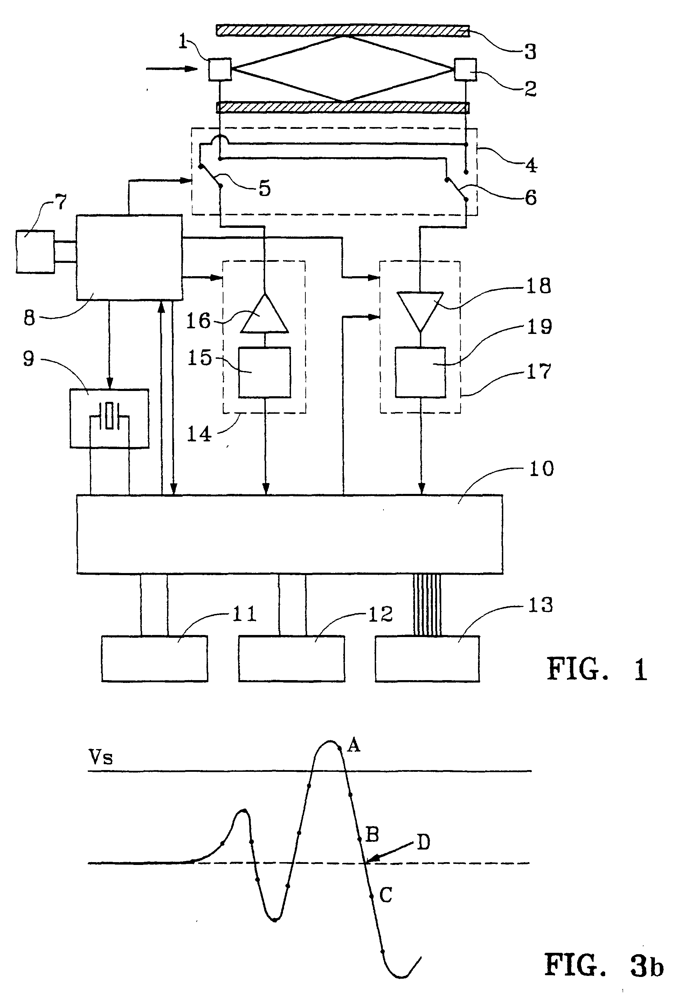

Différents types de circuits électroniques peuvent être utilisés pour assurer un comptage de fluide par une méthode de mesure à ultrasons de la vitesse d'écoulement du fluide. La Figure 1 montre le schéma de principe d'un exemple de tels circuits électroniques qui sont associés à deux transducteurs ultrasonores 1, 2 disposés à distance l'un de l'autre dans une conduite 3 dans laquelle s'écoule un fluide tel qu'un gaz. Les deux transducteurs 1, 2 sont reliés à un bloc de commutation 4 qui comprend deux commutateurs 5, 6 et permet l'utilisation de chaque transducteur alternativement comme émetteur et récepteur. Un module d'émission 14 et un module de réception 17 sont reliés respectivement aux commutateurs 5, 6 du bloc de commutation 4. Le module d'émission 14 comprend un amplificateur opérationnel 16 et un convertisseur numérique-analogique 15. Le module de réception 17 comprend au moins un amplificateur 18 et un convertisseur analogique-numérique 19 qui numérise et échantillonne simultanément le signal reçu. Une source d'énergie électrique 7 et un module 8 de gestion de l'alimentation électrique sont reliés notamment aux modules d'émission 14 et de réception 17 ainsi qu'au bloc de commutation 4 et à un microcontrôleur 10. Le microcontrôleur 10 comprend notamment une horloge à quartz 9, une unité arithmétique et logique, des circuits de mémoire vive et de mémoire morte, et peut coopérer avec des circuits d'affichage 13, une mémoire morte réinscriptible 12 et une liaison série 11 du type RS 232.

Les compteurs de gaz destinés à équiper chaque abonné d'un réseau de distribution doivent être à la fois précis, fiables et le meilleur marché possible. Ces contraintes imposent d'éviter l'utilisation de composants coûteux, de mettre en oeuvre de petites piles d'alimentation de longue durée mais de capacité moyenne pour des raisons de sécurité et d'effectuer des calculs selon un procédé de mesure assurant à la fois une précision et une fiabilité élevées tout en restant suffisamment simple pour être économe en énergie.

Le procédé de mesure selon l'invention qui sera explicité plus loin est ainsi avantageusement appliqué à un dispositif de mesure de la vitesse d'écoulement d'un fluide gazeux, permettant d'assurer le comptage de la consommation de ce fluide, en mettant en oeuvre deux transducteurs ultrasonores disposés à distance l'un de l'autre à l'intérieur d'une conduite, dans le sens d'écoulement du fluide. A titre d'exemple, les transducteurs ultrasonores peuvent fonctionner à une fréquence acoustique Fa de l'ordre de 40 kHz et la fréquence d'échantillonnage Fe des signaux acoustiques reçus est avantageusement de 320 kHz, c'est-à-dire huit fois plus élevée que la fréquence Fa.

La fréquence d'échantillonnage Fe est avantageusement égale à un multiple de la fréquence acoustique Fa. Toutefois, la fréquence Fe peut également prendre d'autres valeurs. Lorsque les valeurs (multiples de Fa ou non multiples) de Fe sont trop basses, il est préférable d'utiliser par exemple un algorithme d'approximation au voisinage du maximum (en valeur absolue) de chaque période du signal acoustique, voire d'effectuer plusieurs mesures successives en déphasant à chaque nouvelle mesure le signal d'échantillonnage par rapport au signal acoustique considéré, ceci afin d'obtenir une plus grande précision sur les valeurs des amplitudes maximales (en valeur absolue). Ces méthodes seront détaillées ultérieurement.

Lorsque les valeurs de Fe sont suffisamment élevées l'emploi de telles méthodes n'est pas nécessaire.

Le signal acoustique émis par chaque transducteur est constitué par exemple par une impulsion émise à la fréquence acoustique déterminée Fa. Cette impulsion est par exemple rectangulaire.
Plusieurs impulsions pourraient également être émises.

D'une manière générale, le débit de fluide dans une conduite peut s'écrire :

$$\Phi = (SL/2)\,(Tu - Td)\,/\,Tu.Td$$

où

S désigne la section moyenne de passage offerte à l'écoulement entre les deux transducteurs acoustiques,
L désigne la distance séparant les transducteurs,
Td est le temps de propagation du signal acoustique émis dans le sens de l'écoulement par le premier transducteur (amont) jusqu'à la réception de ce signal acoustique par le second transducteur (aval),
Tu est le temps de propagation du signal acoustique émis dans le sens contraire de l'écoulement par le second transducteur, jusqu'à la réception de ce signal acoustique par le premier transducteur (amont).

Si la mesure de ce débit fait en outre intervenir une mesure des déphasages acoustiques induits dans chaque signal acoustique par la propagation de chacun des signaux acoustiques émis par les transducteurs dans l'écoulement, le débit de fluide dans une conduite peut s'écrire :

$$\Phi = (SL / 4\pi Fa) (2\pi [Fa (Tu - Td)] + (\varphi d - \varphi u)) / Tu.Td$$

où S, L, Td, Tu ont la signification indiquée ci-dessus, et $\varphi d$ et $\varphi u$ représentent respectivement les déphasages acoustiques induits dans chacun des signaux acoustiques en raison de la propagation de ces signaux et Fa représente la fréquence desdits signaux acoustiques.

De façon plus particulière, les temps de propagation Tu et Td peuvent s'écrire respectivement :

$$Tu = L / (c-v)$$

$$Td = L / (c+v)$$

où c et v représentent respectivement la vitesse de propagation du signal acoustique et la vitesse du gaz.

Pour une composition de gaz donnée, comme la vitesse de propagation c dépend principalement de la température qui varie peu lors des mesures de débit, le terme Tu.Td lui aussi varie peu et ce terme peut être recalculé avec une fréquence relativement faible. Toutefois, dès lors qu'il s'agit de la mesure absolue des temps de propagation, la précision obtenue pour cette mesure est directement reportée sur la précision de mesure du débit. Ainsi, il est essentiel d'éviter d'avoir un décalage sur cette mesure.

Par exemple, si la précision recherchée sur le débit est de 1%, la précision sur la mesure des temps de propagation doit être voisine de 0,5%, ce qui correspond à une erreur inférieure à 2 µs sur les temps de propagation avec les gaz courants et les longueurs usuelles L entre deux transducteurs (exemple : L = 150 mm et le gaz étant du méthane).

Selon un procédé de mesure des temps de propagation Tu et Td, connu sous le nom de méthode de passage à zéro, on mesure les temps de propagation (Tu pz) et (Td pz) des signaux acoustiques émis par chacun des transducteurs jusqu'à la détection par passage à zéro et on en déduit les temps de propagation réels Tu et Td, avec Tu = (Tu pz - To) et Td = (Td pz - To) où To désigne une constante à retrancher pour obtenir le temps de propagation dans le gaz, To ne dépendant que de la nature des transducteurs et des circuits électroniques.

La Figure 3a illustre la méthode de mesure par passage à zéro effectuée sur chaque signal ultrasonore reçu selon un procédé connu, en liaison avec un dispositif tel que celui de la Figure 1.

Le signal reçu est amplifié par l'amplificateur 18 présentant un gain donné, puis converti en numérique et échantillonné simultanément dans le convertisseur 19. Dans l'exemple considéré, l'échantillonnage est effectué à une fréquence Fe par exemple égale à 8 Fa, soit 320 kHz si Fa vaut 40 kHz.

Les instructions permettant d'effectuer les mesures, contenues dans une mémoire morte du microcontrôleur 10, permettent de comparer les valeurs de l'amplitude du signal reçu aux points échantillonnés et qui sont mémorisées dans une mémoire vive, à une valeur prédéterminée correspondant à un seuil $V_s$, et l'on recherche parmi les valeurs d'amplitude des points échantillonnés le premier point suivant A, qui a une valeur d'amplitude supérieure au seuil.

A partir de ce point, on recherche le prochain passage par zéro de la courbe représentative du signal ultrasonore. Pour ce faire, on détermine deux points échantillonnés consécutifs B et C qui encadrent le point où l'amplitude de la courbe passe par la valeur zéro et l'on procède par interpolation linéaire entre B et C pour déterminer le point D et donc mesurer le temps de passage à zéro Tpz.

Selon une variante de réalisation, illustrée sur les Figures 3 et 4 discutées précédemment, il est également possible de rechercher le dernier passage à zéro de la courbe représentative du signal ultrasonore avant que ladite courbe ne passe par le seuil.

La présente invention vise à améliorer cette méthode de détermination d'un temps de propagation de signal par mesure du temps de passage à zéro.

Comme on l'a mentionné précédemment en référence aux Figures 3 et 4, la simple comparaison entre les valeurs d'amplitude de tension aux points échantillonnés d'un signal acoustique reçu et une valeur de tension de seuil $V_s$ peut conduire à des erreurs dans la détermination du temps de passage à zéro Tpz et donc dans le temps de propagation du signal acoustique. Si sur la Figure 4 le temps de passage à zéro $T_3$ pour la courbe $S_{21}$ relative au signal correspondant à un gaz constitué par de l'azote est correct, en revanche le temps de passage à zéro $T_5$ pour la courbe $S_{22}$ relative au signal correspondant à un gaz constitué par un mélange de dioxyde de carbone et de méthane, est incorrect et excessif.

Le procédé selon l'invention permet d'éviter ce genre d'erreur et, d'une manière générale, de réduire la sensibilité du procédé de mesure du temps de passage à zéro à des variations de formes d'onde ainsi qu'à des éventuelles perturbations extérieures qui, si elles étaient détectées, engendreraient des erreurs de mesure.

Selon l'invention, pour rechercher le premier passage à zéro significatif des oscillations caractéristiques $O_c$ du signal acoustique reçu $S_2$, on définit au préalable une première période caractéristique idéale, distincte des oscillations parasites de faible amplitude constituant du bruit, qui détermine le premier passage à zéro des oscillations caractéristiques $O_c$ du signal reçu $S_2$. Cette période idéale est caractérisée par un rapport d'amplitude $\Delta$ entre les amplitudes des valeurs maximales Pi- et Pi+ des lobes négatif et positif de cette période idéale.

Lors de la réception d'un signal acoustique $S_2$

à analyser, qui est échantillonné et numérisé de façon classique, on détermine, pour chaque période du signal acoustique reçu échantillonné et numérisé, les amplitudes des valeurs maximales P- et P+ des lobes négatif et positif de la période examinée. Pour cela, il n'est pas nécessaire d'examiner l'ensemble des points échantillonnés de la période, et la détermination des valeurs maximales (en valeur absolue) P- et P+ des lobes négatif et positif de la période examinée peut être faite par une recherche au simple voisinage de ces extremums.

Cependant, il faut noter qu'il existe un déphasage entre le signal acoustique reçu et le signal d'échantillonnage.

Ainsi, en fonction du déphasage existant, le point échantillonné représentera de façon plus ou moins fidèle les valeurs maximales (en valeur absolue) P- et P+ des lobes négatif et positif.

Pour remédier à ce problème, il est possible d'utiliser un algorithme d'approximation du maximum (en valeur absolue) à partir des points échantillonnés au voisinage du maximum afin d'obtenir une estimation de la valeur réelle de ce maximum quel que soit le déphasage existant entre le signal acoustique reçu et le signal d'échantillonnage.

Par exemple, on peut utiliser un algorithme d'approximation polynômiale connu en soi.

Le problème précédemment évoqué pourrait également être résolu en augmentant la fréquence d'échantillonnage.

Toutefois, lorsque le procédé selon l'invention est mis en oeuvre dans un compteur de fluide qui fonctionne sur piles, il est essentiel de réduire le plus possible la consommation énergétique du procédé et cette exigence n'est pas compatible avec une augmentation de la fréquence d'échantillonnage.

En outre, une fréquence d'échantillonnage élevée nécessite l'emploi d'une horloge plus coûteuse. Une solution intéressante pour résoudre le problème susvisé en respectant les contraintes de consommation énergétique et de coût consisterait (lorsque le signal acoustique est répétable au cours du temps sur plusieurs mesures successives) à effectuer plusieurs mesures successives respectivement sur plusieurs signaux acoustiques consécutifs émis dans le même sens de propagation en déphasant le signal d'échantillonnage par rapport au signal acoustique lorsque l'on effectue une nouvelle mesure, afin d'obtenir après ces différentes mesures plusieurs points échantillonnés décalés au voisinage des amplitudes maximales P- et P+ des lobes négatifs et positifs.

Par exemple, la première mesure est effectuée en échantillonnant normalement le signal acoustique reçu, puis la seconde mesure est effectuée sur le second signal acoustique en déphasant le signal d'échantillonnage par rapport audit second signal acoustique d'une valeur déterminée $1_{/2Fe}$.

Il est ainsi possible d'effectuer plusieurs déphasages successifs (de valeur $1_{/nFe}$ pour n déphasages) sur le deuxième signal acoustique et les signaux acoustiques suivants pour obtenir davantage de points échantillonnés au voisinage des maxima et ainsi avoir une précision encore plus grande sur ces amplitudes maximales P- et P+.

Il est également avantageux de combiner l'utilisation d'un algorithme d'approximation du maximum (en valeur absolue) avec cette solution afin d'accroître davantage encore la précision.

On procède ensuite à une comparaison du rapport de ces amplitudes des valeurs maximales P- et P+ au rapport $\Delta$ correspondant de la période idéale.

Si le résultat de la comparaison est supérieur à une valeur de seuil $G_s$, on considère la période examinée comme une période parasite correspondant à du bruit, et on continue l'analyse sur la période suivante.

Si le résultat de la comparaison est inférieur à la valeur de seuil $G_s$, on considère la période examinée comme une période caractéristique.

On peut alors déterminer de façon fiable le passage par zéro associé à cette période examinée. Ce passage par zéro considéré comme le premier passage à zéro significatif des oscillations caractéristiques du signal acoustique reçu peut être avantageusement le passage par zéro situé entre les deux lobes positif et négatif de la période caractéristique.

La Figure 5 montre une première oscillation caractéristique $O_{ca}$ de période $\Delta T$ avec un lobe positif dont l'amplitude présente une valeur maximale P+ et un lobe négatif dont l'amplitude présente une valeur maximale en valeur absolue P-. Le passage à zéro associé à cette période $\Delta T$ d'une première oscillation caractéristique $O_{ca}$ définit un temps de passage à zéro correspondant à un temps $T_7$.

Le rapport d'amplitude entre les amplitudes des valeurs maximales P- et P+ des deux lobes d'une période examinée du signal acoustique reçu constitue un critère de comparaison indépendant de la nature du gaz. Ainsi, le vieillissement de l'électronique peut entraîner des variations de gain qui n'affecteront pas ce rapport d'amplitude entre les amplitudes maximales P- et P+. La reconnaissance de forme du signal acoustique reçu peut ainsi s'effectuer d'une façon simple, qui limite la consommation d'énergie, puisque la comparaison s'effectue entre les seules amplitudes maximales P- et P+ des lobes et un rapport d'amplitudes théorique $\Delta$ entre les amplitudes maximales Pi- et Pi+ des deux lobes d'une période caractéristique idéale.

Le rapport d'amplitudes théorique $\Delta$ est déterminé au préalable à partir d'une moyenne, pour plusieurs gaz différents et à différents débits, du rapport entre les amplitudes maximales P- et P+ de la période caractéristique observée à partir de l'enregistrement de signaux acoustiques reçus.

Selon un mode particulier de réalisation, la comparaison entre le rapport des amplitudes P- et P+ de la période examinée et le rapport d'amplitude correspondant de la période idéale s'effectue en calculant un critère de ressemblance G qui constitue le résultat de la comparaison comparé à la valeur de seuil $G_s$, et qui est défini de la façon suivante :

$$G = \left| \frac{(P\text{-}) - {}_\Delta (P\text{+})}{(P\text{-})} \right|$$

Le fait d'effectuer des comparaisons en prenant en compte des rapports d'amplitudes maximales des lobes d'une période du signal acoustique reçu, le rapport d'amplitudes théorique de référence $\Delta$ n'est pas affecté par la nature du gaz ou le gain de la chaîne d'amplification du signal reçu. Ceci contribue à faciliter les mesures.

Toutefois, il pourrait se trouver, parmi les périodes parasites du signal qui constituent du bruit, des formes d'ondes ressemblantes à celle définie par le critère de comparaison G. Pour rendre la détection des périodes caractéristiques moins sensible au risque de prendre en compte des formes d'ondes ressemblantes noyées dans du bruit et qui ne constitueraient pas une première période $O_{ca}$ des oscillations caractéristiques $O_c$ du signal reçu, le critère de ressemblance peut être rendu légèrement dépendant de l'amplitude P-.

Ainsi, selon un autre mode de réalisation particulier, a comparaison entre le rapport des amplitudes P- et P+ de la période examinée et le rapport d'amplitudes correspondant de la période idéale s'effectue en calculant un critère de ressemblance G qui constitue le résultat de la comparaison comparé à la valeur de seuil $G_s$, et qui est défini de la façon suivante :

$$G = \left| \frac{(P\text{-}) - {}_\Delta (P\text{+})}{(P\text{-}) \text{-}z} \right|$$

où z représente un terme de décalage destiné à rendre le critère de ressemblance G légèrement dépendant de l'amplitude de la valeur maximale (P-) du lobe négatif de la période caractéristique examinée.

Dans ce cas, le dénominateur du critère G est fortement diminué quand l'amplitude P- est voisine du terme de décalage z. Si le terme de décalage z présente une valeur légèrement supérieure à l'amplitude maximale du bruit (par exemple de l'ordre de 0,20 à 0,25 Volt), ceci permet d'effectuer plus rapidement une réjection des périodes parasites du signal reçu.

Pour déterminer la valeur de $G_s$ à laquelle doit être comparé le critère de ressemblance G, et la valeur du terme de décalage z, on trace un réseau de premières courbes représentant les valeurs maximum du critère de ressemblance G pour les périodes caractéristiques observées et un réseau de deuxièmes courbes représentant les valeurs minimum du critère de ressemblance G pour les périodes parasites observées, en fonction de différentes valeurs possibles du terme de décalage z, et on choisit la valeur de seuil $G_s$ et celle du terme de décalage z, et on choisit la valeur de seuil $G_s$ et celle du terme de décalage z en fonction de la marge de sécurité possible dans la zone intermédiaire entre le réseau de premières courbes et le réseau de deuxièmes courbes.

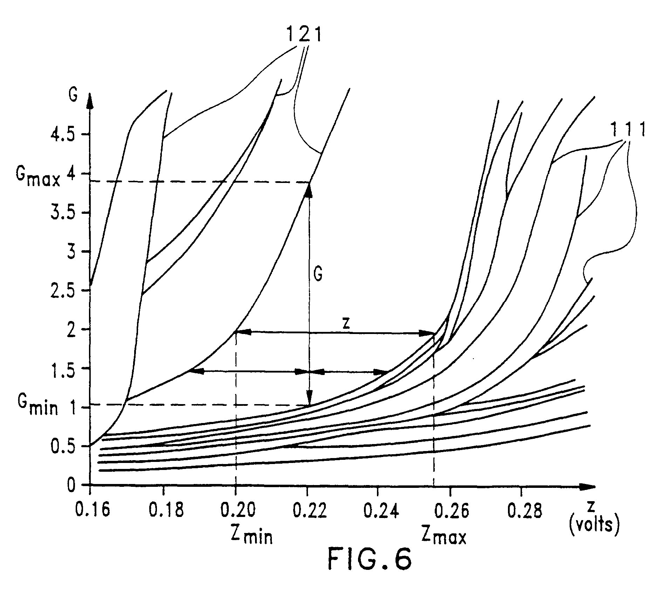

A titre d'exemple, les familles de courbes 111 et 121 de la Figure 6 ont été obtenues en faisant varier le déphasage entre la fréquence d'échantillonnage et le signal et en appliquant un facteur de gain variant entre 0,45 et 1,5, les gaz pris en compte étant le méthane et un mélange de 20% de gaz carbonique et de 80% d'azote, les mesures ayant été faites à débit nul et à 7m$^3$/heure.

Les réseaux de courbes 111 et 121 permettent de choisir les valeurs du terme de décalage z et de la valeur de seuil $G_s$ en fonction de la marge de sécurité voulue sur ces valeurs. Si l'on considère la Figure 6, on voit que l'on peut choisir pour $G_s$ par exemple une valeur comprise entre environ 0,7 et 1,7 V et, pour le terme de décalage z, par exemple une valeur comprise entre 0,21 et 0,25 V.

Si l'on choisit par exemple $G_s$ = 2 et z = 0,22 V; la marge de sécurité sur z est comprise entre 0,20 et 0,25 V tandis que la marge de sécurité pour $G_s$ est comprise entre 1 et 4. En pratique, avec cet exemple, une période examinée sera considérée comme caractéristique si $G < G_s$ = 1,5.

D'autres variantes de réalisation permettent d'accroître encore la sécurité et la fiabilité du procédé.

Ainsi, selon un mode de réalisation particulier, la comparaison entre le rapport des amplitudes P- et P+ de la période examinée et le rapport d'amplitudes correspondant de la période idéale s'effectue en calculant un critère de ressemblance G qui constitue le résultat de la comparaison comparé à la valeur de seuil $G_s$, et qui est défini de la façon suivante :

$$G = \left| \frac{(P\text{-}) - {}_\Delta [(P\text{+}) \text{-}z']}{(P\text{-}) \text{-}z} \right|$$

où z représente un terme de décalage destiné à rendre le critère de ressemblance G légèrement dépendant de l'amplitude de la valeur maximale (P-) du lobe négatif de la période caractéristique examinée, et z' représente un terme de décalage destiné à rendre le critère de ressemblance G légèrement dépendant de l'amplitude de la valeur maximale (P+) du lobe positif de la période caractéristique examinée.

Ceci permet de réduire la sensibilité à des périodes ressemblantes de faible amplitude et, sans augmenter sensiblement la complexité des calculs, de pouvoir diminuer le gain de la chaîne d'amplification jusqu'à des valeurs aussi faibles que 0,35, ce qui économise de l'énergie.

Selon une autre variante, et quelle que soit la formule choisie pour le critère de ressemblance G, on effectue, pour chaque période examinée, deux ou trois calculs du critère de ressemblance G avec des valeurs du rapport d'amplitudes $\Delta$ différentes voisines du rapport d'amplitude théorique prédéterminé et ne s'écartant pas de celle-ci de plus de 10%, en ce que l'on considère la période examinée comme une période caractéristique si le critère de ressemblance calculé G est dans tous les cas inférieur à la valeur de seuil $G_s$.

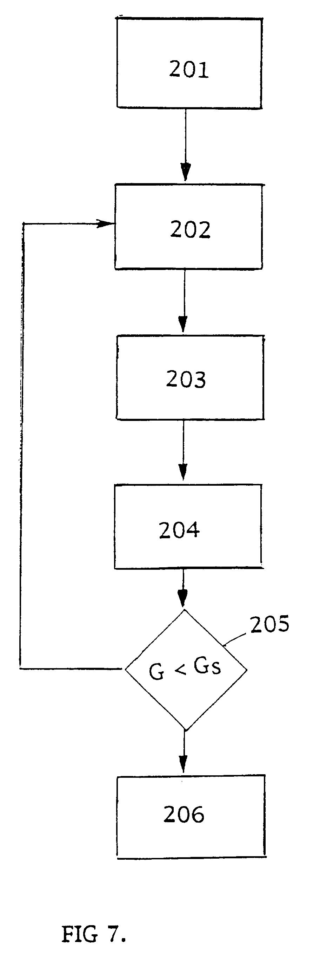

La Figure 7 est un organigramme montrant un exemple de processus de mise en oeuvre du procédé selon l'invention.

Si l'on considère un échantillonnage à une fréquence Fe, par exemple de 320 kHz, qui représente huit fois la fréquence acoustique Fa des transducteurs, le signal échantillonné comportera 8 points par période du signal reçu.

Dans la mesure où le signal acoustique reçu présente la forme d'oscillations périodiques, on sait où se trouvent les minimums et maximums successifs, ce qui évite d'examiner l'ensemble des points échantillonnés.

On commence donc, après la phase d'initialisation 201, à chercher au cours d'une étape 202, le prochain minimum local (d'amplitude P-). Au cours de cette étape 202, si l'on applique un critère de ressemblance G faisant intervenir un terme de décalage z, on ne retient que le premier minimum local dont l'amplitude P- est supérieure en valeur absolue au terme de décalage z. Quant ce premier minimum local a été trouvé, on passe à l'étape 203 qui consiste à chercher au voisinage d'une demi-période T/2 précédente, la valeur de l'amplitude maximale P+.

A l'étape suivante 204, on calcule la valeur du critère de ressemblance G avec les valeurs précédemment trouvés du minimum P- et du maximum P+ de la période examinée qui présente au moins un minimum dont la valeur absolue est supérieure au terme de décalage z.

A l'étape 205, on effectue un test de comparaison entre la valeur du critère G calculée et la valeur de seuil $G_s$.

Si $G \geq G_s$ pour la période examinée, on considère qu'il s'agit d'une période parasite, et il y a retour à l'étape 202 de recherche d'un prochain minimum local.

Si $G < G_s$ pour la période examinée, celle-ci est considérée comme une période caractéristique et on passe à une étape 206 de détermination du prochain passage à zéro de l'amplitude du signal reçu qui constituera le passage à zéro situé entre le maximum local P+ et le minimum local P- et sera donc le vrai point de départ des oscillations caractéristiques $O_c$ du signal acoustique reçu.

Le même processus sera renouvelé quelques instants plus tard pour une nouvelle mesure de détermination du temps de propagation d'un signal acoustique ultrasonore.

## Revendications

1. Procédé de mesure du temps de propagation d'un signal acoustique dans un écoulement de fluide entre un premier transducteur (1) jouant le rôle d'émetteur et un second transducteur (2) jouant le rôle de récepteur et situé à une distance déterminée du premier transducteur (1), le signal acoustique émis par le premier transducteur (1) étant constitué par au moins une impulsion $S_1$ émise à une fréquence acoustique déterminée Fa et le signal acoustique reçu par le second transducteur (2) comprenant une série d'oscillations caractéristiques dont l'amplitude est d'abord croissante sur plusieurs périodes, puis décroissante sur plusieurs périodes suivantes, l'enveloppe des oscillations caractéristiques présentant la forme d'un fuseau, le procédé consistant à échantillonner le signal acoustique reçu, à une fréquence d'échantillonnage Fe, à numériser le signal acoustique reçu échantillonné, et à rechercher, par analyse du signal acoustique reçu échantillonné et numérisé, le premier passage à zéro significatif des oscillations caractéristiques du signal acoustique reçu, **caractérisé en ce que**, pour rechercher le premier passage à zéro significatif des oscillations caractéristiques du signal acoustique reçu, on définit au préalable une première période caractéristique idéale déterminant le premier passage par zéro des oscillations caractéristiques du signal acoustique reçu, en caractérisant cette période idéale par un rapport d'amplitude théorique entre les amplitudes maximales Pi- et Pi+ des deux lobes de cette période, on détermine pour chaque période du signal acoustique reçu échantillonné et numérisé, les amplitudes maximales P- et P+ des deux lobes de la période examinée, on compare le rapport de ces amplitudes P- et P+ au rapport d'amplitudes théorique correspondant de la période idéale puis, si le résultat de la comparaison est supérieur à une valeur de seuil $G_s$, on considère la période examinée comme une période parasite correspondant à du bruit tandis que, si le résultat de la comparaison est inférieur à cette valeur de seuil $G_s$, on considère la période examinée comme une période caractéristique et on détermine alors le passage par zéro entre deux lobes de cette période caractéristique, lequel passage à zéro est considéré comme le premier passage à zéro significatif des oscillations caractéristiques du signal acoustique reçu.

2. Procédé selon la revendication 1, **caractérisé en**

**ce que** le rapport d'amplitudes théorique $\Delta$ entre les amplitudes maximales Pi- et Pi+ des deux lobes de ladite période idéale est déterminé au préalable à partir d'une moyenne, pour plusieurs gaz différents et à différents débits, du rapport entre les amplitudes maximales P- et P+ de la période caractéristique observée à partir de l'enregistrement de signaux acoustiques reçus.

**3.** Procédé selon la revendication 1 ou 2, **caractérisé en ce que** la comparaison entre le rapport des amplitudes P- et P+ de la période examinée et le rapport d'amplitudes théorique $\Delta$ correspondant de la période idéale s'effectue en calculant un critère de ressemblance G qui constitue le résultat de la comparaison comparé à la valeur de seuil $G_s$, et qui est défini de la façon suivante :

$$G = \left| \frac{(P-) - {}_\Delta (P+)}{(P-)} \right|$$

**4.** Procédé selon la revendication 1 ou 2, **caractérisé en ce que** la comparaison entre le rapport des amplitudes P- et P+ de la période examinée et le rapport d'amplitudes théorique $\Delta$ correspondant de la période idéale s'effectue en calculant un critère de ressemblance G qui constitue le résultat de la comparaison comparé à la valeur de seuil $G_s$, et qui est défini de la façon suivante :

$$G = \left| \frac{(P-) - {}_\Delta (P+)}{(P-) - z} \right|$$

où z représente un terme de décalage destiné à rendre le critère de ressemblance G légèrement dépendant de l'amplitude maximale P- du lobe négatif de la période caractéristique examinée.

**5.** Procédé selon la revendication 1 ou 2, **caractérisé en ce que** la comparaison entre le rapport des amplitudes P- et P+ de la période examinée et le rapport d'amplitudes théorique $\Delta$ correspondant de la période idéale s'effectue en calculant un critère de ressemblance G qui constitue le résultat de la comparaison comparé à la valeur de seuil $G_s$, et qui est défini de la façon suivante :

$$G = \left| \frac{(P-) - {}_\Delta [(P+) - z']}{(P-) - z} \right|$$

où z représente un terme de décalage destiné à rendre le critère de ressemblance G légèrement dépendant de l'amplitude maximale P- du lobe négatif de la période caractéristique examinée, et z' représente un terme de décalage destiné à rendre le critère de ressemblance G légèrement dépendant de l'amplitude maximale P+ du lobe positif de la période caractéristique examinée.

**6.** Procédé selon l'une quelconque des revendications 1 à 5, **caractérisé en ce que**, pour déterminer avec plus de précision les amplitudes maximales P- et P+ des deux lobes de chaque période examinée, on utilise un algorithme d'approximation du maximum (en valeur absolue) à partir des points échantillonnés au voisinage de chaque maximum.

**7.** Procédé selon l'une quelconque des revendications 1 à 6, **caractérisé en ce que**, pour déterminer avec plus de précision les amplitudes maximales P- et P+ des deux lobes de chaque période examinée, on effectue plusieurs mesures successives respectivement sur plusieurs signaux acoustiques consécutifs en déphasant pour chaque signal acoustique le signal d'échantillonnage par rapport au signal acoustique considéré, afin d'obtenir après ces différentes mesures plusieurs points échantillonnés décalés au voisinage des amplitudes maximales.

**8.** Procédé selon l'une quelconque des revendications 3 à 7, **caractérisé en ce que** l'on effectue, pour chaque période examinée, deux ou trois calculs du critère de ressemblance G avec des valeurs du rapport d'amplitudes théorique $\Delta$ différentes voisines du rapport d'amplitudes théorique prédéterminé et ne s'écartant pas de celle-ci de plus de 10%, et **en ce que** l'on considère la période examinée comme une période caractéristique si le critère de ressemblance calculé G est dans tous les cas inférieur à la valeur de seuil $G_s$.

**9.** Procédé selon la revendication 4, **caractérisé en ce que**, pour déterminer la valeur de seuil $G_s$ du critère de ressemblance G, ainsi que la valeur du terme de décalage z, on trace au préalable, pour différents gaz et différents débits, en faisant varier le déphasage entre la fréquence d'échantillonnage Fe et le signal acoustique reçu et en appliquant un facteur de gain variant entre 0,45 et 1,5, un réseau de premières courbes (111) représentant les valeurs maximums du critère de ressemblance G pour les périodes caractéristiques observées et un réseau de deuxièmes courbes (121) représentant les valeurs minimums du critère de ressemblance G pour les périodes parasites observées, en fonction de différentes valeurs possibles du terme de décalage z, et on choisit la valeur de seuil $G_s$ et celle du terme de décalage z en fonction de la marge de sécurité possible dans la zone intermédiaire entre le réseau de premières courbes (111) et le réseau de deuxièmes courbes (121).

10. Procédé selon la revendication 4 ou 9, **caractérisé en ce que** la valeur de seuil $G_s$ est comprise entre 0,7 et 1,7 et la valeur du terme de décalage z est comprise entre 0,21 et 0,25 V.

11. Procédé de mesure de la vitesse d'écoulement d'un fluide entre deux transducteurs disposés en des points de mesure espacés dans la direction d'un écoulement du fluide, selon lequel la valeur de la vitesse d'écoulement à mesurer est obtenue en combinant une mesure des temps de propagation respectifs de chacun des deux signaux acoustiques émis entre les deux points dans des sens opposés par les transducteurs, avec une mesure des déphasages acoustiques respectivement induits dans chaque signal acoustique par la propagation de chacun desdits signaux acoustiques dans l'écoulement, **caractérisé en ce que** la mesure des temps de propagation respectifs de chacun des deux signaux acoustiques émis entre les deux points de mesure est effectuée selon le procédé conforme à l'une quelconque des revendications 1 à 10.

**Patentansprüche**

1. Verfahren zum Messen der Ausbreitungszeit eines Schallsignals in einer Fluidströmung zwischen einem ersten Meßwandler (1), der die Rolle eines Senders spielt, und einem zweiten Meßwandler (2), der die Rolle eines Empfängers spielt und sich in einem bestimmten Abstand vom ersten Meßwandler (1) befindet, wobei das vom ersten Meßwandler (1) ausgesendete Schallsignal aus wenigstens einem Impuls $S_1$ gebildet ist, das mit einer bestimmten Schallfrequenz Fa gesendet wird, und wobei das Schallsignal, das vom zweiten Meßwandler (2) empfangen wird, eine Reihe von Eigenschwingungen umfaßt, deren Amplitude zunächst über mehrere Perioden zunimmt und dann über mehrere folgende Perioden abnimmt, wobei die Einhüllende der Eigenschwingungen bauchförmig ist, wobei das Verfahren darin besteht, das empfangene Schallsignal mit einer Abtastfrequenz Fe abzutasten, das abgetastete empfangene Schallsignal zu digitalisieren und durch Analyse des digitalisierten und abgetasteten empfangenen Schallsignals den ersten signifikanten Nulldurchgang der Eigenschwingungen des empfangenen Schallsignals zu suchen, **dadurch gekennzeichnet, daß** zum Suchen des ersten signifikanten Nulldurchgangs der Eigenschwingungen des empfangenen Schallsignals vorher eine erste ideale charakteristische Periode definiert wird, die den ersten Nulldurchgang der Eigenschwingungen des empfangenen Schallsignals bestimmt, indem sie diese ideale Periode durch ein theoretisches Amplitudenverhältnis zwischen den maximalen Amplituden Pi- und Pi+ der beiden Keulen dieser Periode kennzeichnet, für jede Periode des digitalisierten abgetasteten, empfangenen Schallsignals die maximalen Amplituden P- und P+ der beiden Keulen der untersuchten Periode bestimmt werden, das Verhältnis dieser Amplituden P- und P+ mit dem theoretischen Amplitudenverhältnis, das der idealen Periode entspricht, verglichen wird und daß dann, wenn das Vergleichsergebnis größer als ein Schwellenwert Gs ist, die untersuchte Periode als eine parasitäre Periode betrachtet wird, die dem Rauschen entspricht, während dann, wenn das Vergleichsergebnis kleiner als dieser Schwellenwert Gs ist, die untersuchte Periode als eine charakteristische Periode betrachtet wird und dann der Nulldurchgang zwischen zwei Keulen dieser charakteristischen Periode bestimmt wird, welcher als der erste signifikante Nulldurchgang der Eigenschwingungen des empfangenen Schallsignals betrachtet wird.

2. Verfahren nach Anspruch 1, **dadurch gekennzeichnet, daß** das theoretische Amplitudenverhältnis $\Delta$ zwischen den maximalen Amplituden Pi- und Pi+ der beiden Keulen der idealen Periode im voraus anhand eines Mittelwerts, für mehrere verschiedene Gase mit verschiedenen Durchflußmengen, des Verhältnisses zwischen den maximalen Amplituden P- und P+ der beobachteten charakteristischen Periode anhand der Aufzeichnung der empfangenen Schallsignale bestimmt wird.

3. Verfahren nach Anspruch 1 oder 2, **dadurch gekennzeichnet, daß** der Vergleich zwischen dem Verhältnis der Amplituden P- und P+ der untersuchten Periode und dem theoretischen Amplitudenverhältnis $\Delta$, das der idealen Periode entspricht, dadurch ausgeführt wird, daß ein Ähnlichkeitskriterium G berechnet wird, das das Vergleichsergebnis bildet, das mit dem Schwellenwert $G_s$ verglichen wird und das folgendermaßen definiert ist:

$$G = \left| \frac{(P-) - _\Delta (P+)}{(P-)} \right|$$

4. Verfahren nach Anspruch 1 oder 2, **dadurch ge-**

**kennzeichnet, daß** der Vergleich zwischen dem Verhältnis der Amplituden P- und P+ der untersuchten Periode und dem theoretischen Amplitudenverhältnis ∆, das der idealen Periode entspricht, dadurch ausgeführt wird, daß ein Ähnlichkeitskriterium G berechnet wird, das das Vergleichsergebnis bildet, das mit dem Schwellenwert $G_s$ verglichen wird und das folgendermaßen definiert ist:

$$G = \left| \frac{(P-) -_\Delta (P+)}{(P-) - z} \right|$$

wobei z einen Verschiebungsterm darstellt, der so bestimmt ist, daß das Ähnlichkeitskriterium G in geringem Maß von der maximalen Amplitude P- der negativen Keule der untersuchten charakteristischen Periode abhängig gemacht wird.

5. Verfahren nach Anspruch 1 oder 2, **dadurch gekennzeichnet, daß** der Vergleich zwischen dem Verhältnis der Amplituden P- und P+ der untersuchten Periode und dem theoretischen Amplitudenverhältnis ∆, das der idealen Periode entspricht, dadurch ausgeführt wird, daß ein Ähnlichkeitskriterium G berechnet wird, das das Vergleichsergebnis bildet, das mit dem Schwellenwert $G_s$ verglichen wird und das folgendermaßen definiert ist:

$$G = \left| \frac{(P-) -_\Delta [(P+) - z']}{(P-) - z} \right|$$

wobei z einen Verschiebungsterm darstellt, der so bestimmt ist, daß das Ähnlichkeitskriterium G in geringem Maß von der maximalen Amplitude P- der negativen Keule der untersuchten charakteristischen Periode abhängig gemacht wird, und z' einen Verschiebungsterm darstellt, der so bestimmt ist, daß das Ähnlichkeitskriterium G in geringem Maß von der maximalen Amplitude P+ der positiven Keule der untersuchten charakteristischen Periode abhängig gemacht wird.

6. Verfahren nach einem der Ansprüche 1 bis 5, **dadurch gekennzeichnet, daß** für die Bestimmung mit größerer Genauigkeit der maximalen Amplituden P- und P+ der beiden Keulen jeder untersuchten Periode ein Algorithmus für die Approximation des Maximums (dem Absolutwert nach) anhand von Abtastpunkten in der Umgebung jedes Maximums verwendet wird.

7. Verfahren nach einem der Ansprüche 1 bis 6, **da-**

**durch gekennzeichnet, daß** für die Bestimmung mit größerer Genauigkeit der maximalen Amplituden P- und P+ der beiden Keulen jeder untersuchten Periode mehrere aufeinanderfolgende Messungen an mehreren entsprechenden aufeinanderfolgenden Schallsignalen ausgeführt werden, indem für jedes Schallsignal das Abtastsignal in bezug auf das betrachtete Schallsignal phasenverschoben wird, um nach diesen verschiedenen Messungen mehrere verschobene Abtastwerte in der Umgebung der maximalen Amplituden zu erhalten.

8. Verfahren nach einem der Ansprüche 3 bis 7, **dadurch gekennzeichnet, daß** für jede untersuchte Periode zwei oder drei Berechnungen des Ähnlichkeitskriteriums G mit verschiedenen Werten des theoretischen Amplitudenverhältnisses ∆ in der Nähe des vorgegebenen theoretischen Amplitudenverhältnisses, die nicht weiter als 10 % von diesem beabstandet sind, ausgeführt werden, und daß die untersuchte Periode als eine charakteristische Periode betrachtet wird, falls das berechnete Ähnlichkeitskriterium G in allen diesen Fällen kleiner als der Schwellenwert $G_s$ ist.

9. Verfahren nach Anspruch 4, **dadurch gekennzeichnet, daß** für die Bestimmung des Schwellenwertes $G_s$ des Ähnlichkeitskriteriums G sowie des Wertes des Verschiebungsterms z im voraus für verschiedene Gase und verschiedene Durchflußmengen durch Variieren der Phasenverschiebung zwischen der Abtastfrequenz Fe und dem empfangenen Schallsignal und durch Anwenden eines Verstärkungsfaktors, der zwischen 0,45 und 1,5 veränderlich ist, ein Netz (111) aus ersten Kurven gezogen wird, die die maximalen Werte des Ähnlichkeitskriteriums G für die beobachteten charakteristischen Perioden darstellen, und ein Netz (121) aus zweiten Kurven gezogen wird, die die minimalen Werte des Ähnlichkeitskriteriums G für die beobachteten parasitären Perioden darstellen, in Abhängigkeit von verschiedenen möglichen Werten des Verschiebungsterms z, und daß der Schwellenwert $G_s$ und der Wert des Verschiebungsterms z in Abhängigkeit von der möglichen Sicherheitsspanne in der Zwischenzone zwischen dem Netz (111) aus ersten Kurven und dem Netz (121) aus zweiten Kurven gewählt wird.

10. Verfahren nach Anspruch 4 oder 9, **dadurch gekennzeichnet, daß** der Schwellenwert $G_s$ im Bereich von 0,7 bis 1,7 liegt und der Wert des Verschiebungsterms z im Bereich von 0,21 bis 0,25 V liegt.

11. Verfahren zum Messen der Strömungsgeschwindigkeit eines Fluids zwischen zwei Meßwandlern, die an Meßpunkten angeordnet sind, die in Richtung einer Fluidströmung beabstandet sind, bei dem der Wert der zu messenden Strömungsgeschwindigkeit dadurch erhalten wird, daß eine Messung der jeweiligen Ausbreitungszeiten jedes der beiden Schallsignale, die zwischen den beiden Punkten in entgegengesetzten Richtungen von den Meßwandlern ausgesendet werden, mit einer Messung der jeweiligen akustischen Phasenverschiebungen, die in jedes Schallsignal durch die Ausbreitung jedes der Schallsignale in der Strömung eingeführt wird, kombiniert wird, **dadurch gekennzeichnet, daß** die Messung der jeweiligen Ausbreitungszeiten jedes der beiden Schallsignale, die zwischen den beiden Meßpunkten ausgesendet werden, gemäß dem Verfahren nach einem der Ansprüche 1 bis 10 ausgeführt wird.

## Claims

1.  A method for measuring the propagation time of an acoustical signal within a fluid flow between a first transducer (1) serving as a transmitter and a second transducer (2) serving as the receiver and located at a determined distance from the first transducer (1), wherein the acoustical signal transmitted by the first transducer (1) comprises at least one pulse $S_1$ transmitted at a determined acoustical frequency Fa and the acoustical signal received by the second transducer (2) comprises a series of characteristic oscillations having an amplitude which first decreases over several periods, then decreases over several following periods, the envelope of the characteristic oscillations being spindle-shaped, wherein the method consists in sampling the received acoustical signal at a sampling frequency Fe, digitizing the sampled received acoustical signal, and searching, by analyzing the sampled and digitized received acoustical signal, the first significant zero-crossing of the characteristic oscillations of the received acoustical signal, **characterized in that**, for searching the first significant zero-crossing of the characteristic oscillations of the received signal, a first ideal characteristic period is previously defined which determines the first zero-crossing of the characteristic oscillations of the received acoustical signal, by **characterizing** said ideal period by means of a theoretical amplitude ratio between the maximum amplitudes Pi- and Pi+ of the two lobes of said period, for each period of the sampled and digitized received acoustical signal, the maximum amplitudes P- and P+ of the two lobes of the analyzed period are determined, the ratio of said amplitudes P- and P+ is compared to the ratio of theoretical amplitudes, which ratio corresponds to the ideal period and then, if the result of said comparison is greater than a threshold value $G_s$, the analyzed period is considered to be a spurious period corresponding to a noise, whereas, if the result of said comparison is smaller than said threshold value $G_s$, the analyzed period is considered to be a characteristic period and the zero crossing between the two lobes of said characteristic period is then determined, which zero-crossing is considered to be the first significant zero-crossing of the characteristic oscillations of the received acoustical signal.

2.  A method as claimed in claim 1, **characterized in that** said theoretical ratio of amplitudes $\Delta$ between the maximum amplitudes Pi- and Pi+ of the two lobes of said ideal period is previously determined by averaging, for several different gases and at different flow rates, the ratio between the maximum amplitudes P- and P+ of the characteristic period as observed from the recorded received acoustical signals.

3.  A method as claimed in claim 1 or 2, **characterized in that** a comparison between the ratio of amplitudes P- and P+ of the analyzed period and the theoretical ratio of amplitudes $\Delta$ corresponding to the ideal period is carried out by computing a similarity criterion G which is the result of the comparison to the threshold value $G_s$, and which is defined as follows:

$$G = \left| \frac{(P-) -_\Delta (P+)}{(P-)} \right|$$

4.  A method as claimed in claim 1 or 2, **characterized in that** the comparison between the ratio of amplitudes P- and P+ of the analyzed period and the theoretical ratio of amplitudes $\Delta$ corresponding to the ideal period is carried out by computing a similarity criterion G which is the result of the comparison to the threshold value $G_s$, and which is defined as follows:

$$G = \left| \frac{(P-) -_\Delta (P+)}{(P-) - z} \right|$$

where z represents an offset term for making the similarity criterion G slightly dependant on the maximum amplitude P- of the negative lobe of the analyzed characteristic period.

5.  A method as claimed in claim 1 or 2, **characterized in that** the comparison between the ratio of amplitudes P- and P+ of the analyzed period and the theoretical ratio of amplitudes $\Delta$ corresponding to the

ideal period is carried out by computing a similarity criterion G which is the result of the comparison to the threshold value $G_s$, and which is defined as follows:

$$G = \left| \frac{(P-) -_{\Delta} [(P+) - z']}{(P-) - z} \right|$$

where z represents an offset term for making the similarity criterion G slightly dependant on the maximum amplitude P- of the negative lobe of the analyzed characteristic period, and z' represents an offset term for making the similarity criterion G slightly dependant on the maximum amplitude P+ of the positive lobe of the analyzed characteristic period.

6. A method as claimed in any one of claims 1 to 5, **characterized in that**, for determining the maximum amplitudes P- and P+ of the two lobes of each analyzed period with greater accuracy, the maximum approximation algorithm (in absolute value) is applied to points sampled in the vicinity of each maximum.

7. A method as claimed in any one of claims 1 to 6, **characterized in that**, for determining the maximum amplitudes P- and P+ of the two lobes of each analyzed period with greater accuracy, several consecutive measurements are carried out respectively over several consecutive acoustical signals by phase-shifting, for each acoustical signal, the sampling signal relative to the considered acoustical signal, in order to obtain, after these different measurements, several sampled points which are offset in the vicinity of the maximum amplitudes.

8. A method as claimed in any one of claims 3 to 7, **characterized in that**, for each analyzed period, two or three computations of the similarity criterion G with different values of the theoretical ratio of amplitudes $\Delta$ in the vicinity of the predetermined theoretical amplitude ratio, which do not deviate from the latter by more than 10 %, are carried out, and the analyzed period is considered to be the characteristic period if the computed similarity criterion G is always smaller than the threshold value $G_s$.

9. A method according to claim 4, **characterized in that**, for determining the threshold value $G_s$ of the similarity criterion G as well as the value of the offset term z, there is previously plotted, for different gazes and different flow rates, by varying the phase-shift between the sampling frequency Fe and the received acoustical signal and by applying a gain factor which varies between 0.45 and 1.5, a set of first curves (111) representing the maximum values of similarity criterion G for the observed characteristic period and a set of second curves (121) representing the minimum values of the similarity criterion G for the observed spurious periods, as a function of the different possible values of the offset term z, and the threshold value $G_s$ and that of the offset term z, are chosen as a function of the possible safety margin within the intermediate area between the set of first curves (111) and the set of second curves (121).

10. A method as claimed in claim 4 or 9, **characterized in that** the threshold value $G_s$ ranges between 0.7 and 1.7 and the value of the offset term z ranges between 0.21 and 0.25 V.

11. A method for measuring the flow velocity of a fluid between two transducers arranged at measurement points spaced apart in a direction of a flow of said fluid, wherein the value of the flow velocity to be measured is obtained by combining a measurement of the respective propagation times for each of the two acoustical signals transmitted from said transducers between said two points in opposite directions, with a measurement of the acoustical phase-shifts induced respectively in each acoustical signal by the propagation of each of said acoustical signals within said flow, **characterized in that** the measurement of the respective propagation times of each of the two acoustical signals transmitted between the two measurement points is carried out according to the method of any of claims 1 to 10.

FIG. 1

FIG. 3b

FIG.2

FIG.3a

FIG.4

FIG.5

FIG.6

FIG 7.